# EUROPÄISCHE PATENTANMELDUNG

(11) **EP 1 974 968 A2**
(43) Veröffentlichungstag der Anmeldung: **01.10.2008**
(21) Anmeldenummer: 08004894.5
(22) Anmeldetag: 15.03.2008
(51) Int. Cl.: B60J 7/14, B62D 25/06

(54) **Fahrzeugdach für ein Kraftfahrzeug**

(30) Priorität: 28.03.2007 DE 102007014796
(71) Anmelder: Wilhelm Karmann GmbH, 49084 Osnabrück (DE)
(72) Erfinder: Schramm, Holger, 49143 Bissendorf (DE)

(57) **Zusammenfassung**

Ein Fahrzeugdach (12) für ein Kraftfahrzeug (10) weist zwei seitliche Rahmenteile (26, 28) auf, von denen jeder an einer Fahrzeugkarosserie derart anbringbar ist, dass er sich an einer Fahrzeugseite von einem Heckbereich (30) des Kraftfahrzeugs (10) zu einer Seite eines Windschutzscheibenrahmens (32) erstreckt. Ein vorderes Dachmodul (14) und eine hinteres Dachmodul (16) überdecken den Bereich zwischen den Rahmenteilen (26, 28) und sind an den Rahmenteilen (26, 28) befestigt. Das Fahrzeugdach weist weiter je zwei vordere Rahmenabdeckteile (18, 20), die beidseitig des vorderen Dachmoduls (14) die seitlichen Rahmenteile (26, 28) überdecken, und je zwei hintere Rahmenabdeckteile (22, 24), die beidseitig des hinteren Dachmoduls (16) die seitlichen Rahmenteile (26, 28) überdecken, auf.

## Beschreibung

Die Erfindung betrifft ein Fahrzeugdach für ein Kraftfahrzeug und ein Kraftfahrzeug mit einem Fahrzeugdach.

Fahrzeugdächer für Kraftfahrzeuge, die ein Dachmodul enthalten, werden im Allgemeinen auf einem Rahmen angebracht, der mit der Fahrzeugstruktur verbunden ist oder ein Teil davon ist. Dabei ermöglicht die Modulbauweise, dass bei einem einzigen Rahmen verschiedene Dachmodule anbringbar sind. Dadurch stehen für einen Fahrzeugtyp kostengünstig mehrere Dachvarianten zur Verfügung.

Die EP 1 555 152 A2 offenbart ein einklappbares Verdeck, das einen vorderen Abschnitt, einen mittleren Abschnitt und einen hinteren Abschnitt aufweist. Bei einer ersten Ausführungsform weist das Verdeck steife vordere, mittlere und hintere Abschnitte auf. Bei einer zweiten Ausführungsform weist das Verdeck steife vordere und hintere Abschnitte und einen membranartigen mittleren Abschnitt auf. Ein einziger Einklappmechanismus wird verwendet, um eine Bewegung des vorderen, mittleren und hinteren Abschnitts zwischen einer Öffnungs- und einer Schließstellung zu ermöglichen.

Die EP 1 086 013 B2 offenbart ein Verfahren zur Fertigung einer Karosserie mit einer Dachgruppe. Die Dachgruppe enthält eine außenliegende Dachhaut und einen nach innen weisenden Dachhimmel, oder zusätzlich einen Dachhimmelrahmen, und eine Basisstruktur. Die Dachgruppe ist als Montagegruppe ausgebildet. Der Dachhimmel und die Dachhaut mit der Basisstruktur weisen an ihren gegenseitigen Fügestellen aufeinander abgestimmte Anschlusskonfigurationen auf.

Die DE 34 29 880 C2 offenbart eine auswechselbare Dachkonstruktion für Kraftfahrzeuge. Die Dachkonstruktion kann durch Schnell- oder Schnappverschlüsse lösbar mit der Karosserie verbunden werden. Die Dachkonstruktion ist als das gesamte Fahrzeugdach umfassende vormontierte Baugruppe ausgebildet und als Kunststoffspritzteil ausgeführt.

Die DE 299 21 458 U1 offenbart ein Fahrzeug mit einer Rohkarosserie und einem mit dieser verbindbaren Dachmodul. Die Rohkarosserie ist hinsichtlich ihrer Schnittstellen zum Dachmodul für eine wahlweise Aufnahme eines festen Dachmoduls, eines mit wenigstens einem öffnungsfähigen Dachteil versehenen Dachmoduls oder eines mit einem faltbaren Verdeck ausgerüsteten Dachmoduls ausgelegt.

Die DE 101 48 537 A1 offenbart einen Dachaufbau eines Fahrzeugs mit einer bewegbaren vorderen Deckeleinrichtung zum Verschließen oder zumindest teilweise Freigeben einer vorderen Dachöffnung und mit einer sich an die vordere Deckeleinrichtung anschließenden Heckklappe oder Heckscheibe, die zum Freigeben einer hinteren Dachöffnung um ihren Vorderrand hochschwenkbar ist. Die vordere Deckeleinrichtung ist an einem der vorderen Dachöffnung zugeordneten Modulrahmen gelagert. Der Modulrahmen ist an einem karosseriefesten Dachrahmen angebracht und weist an seinem hinteren Rahmenquerteil eine Schwenklagereinrichtung für die sich vom Modulrahmen nach hinten erstreckende Heckklappe oder Heckklappe auf.

Die DE 102 30 443 A1 offenbart einen Kraftwagen mit einem Dachmodul, das auf eine Karosserie aufsetzbar und an dieser befestigbar ist. Das Dachmodul umfasst eine durchsichtige Windschutzscheibe und einen daran anschließenden Dachbereich, der,zumindest bereichsweise aus durchsichtigem Material besteht. Zur Befestigung des Dachmoduls weist die Karosserie des Dachmoduls einen Rahmen auf, der zumindest seitliche A-Säulen und daran anschließende Dachholme umfasst.

Die DE 102 28 410 A1 offenbart einen Dachaufbau mit einem an einem fahrzeugfesten Dachrahmen festlegbaren Trägerrahmen zum Aufnehmen einer Dachschließeinrichtung. In einer ersten Variante weist der Trägerrahmen eine als Dachschließeinrichtung und mittels einer Lagermechanik gelagerte öffnungsfähige Dacheinheit, insbesondere ein außen geführtes Schiebedach, auf. In einer zweiten Variante weist der Trägerrahmen eine Hilfsrahmenstruktur auf, die sich in Fahrzeuglängsrichtung im Wesentlichen über einen Mittelbereich des Dachaufbaus bzw. des Trägerrahmens erstreckt und an der zumindest ein Dachschließelement lösbar festlegbar ist. Beidseits des mittleren Dachschließelements sind jeweils zumindest ein seitliches Dachflächenelement fest angebracht.

Die DE 101 58 401 B4 offenbart ein Moduldach für ein Kraftfahrzeug zum Einbau in einen hierfür vorgesehenen Dachausschnitt in der Fahrzeugkarosserie. Das Moduldach weist einen randseitigen Klebebereich auf, in dessen Bereich das Moduldach in Einbaulage mit einem Flansch im Dachausschnitt der Fahrzeugkarosserie überlappt. Das Moduldach und der Flansch weisen im Bereich der Seitenholme eine Bombierung, d.h. Krümmung, in Fahrzeuglängsrichtung auf.

Die DE 198 51 366 A1 offenbart eine Sonnendachanordnung für ein Automobil. Die Anordnung verwendet eine feste Dachplatte, eine hintere Sonnendachplatte, eine vordere Sonnendachplatte, einen hinteren Sonnenschutz und einen vorderen Sonnenschutz. Eine einstellbare Befestigung von Führungsschienen aneinander ist vorgesehen.

Die EP 1 286 846 B1 offenbart ein Kraftfahrzeug mit einem Moduldach, das an einer Dachkonstruktion der Rohkarosserie des Kraftfahrzeugs befestigt ist. Die Dachkonstruktion weist eine vorderen und einen hinteren Querholm und einen rechten und einen linken Seitenholm auf. Das Moduldach weist zwei Dachmodulelemente auf, die eine von den Seitenholmen begrenzte Dachkonstruktionsöffnung teilweise oder vollständig verschließen. Die zwei Dachmodulelemente sind unmittelbar an der Dachkonstruktion befestigt.

Ferner ist eine Modullösung für ein Fahrzeugdach bekannt, bei der ein einzelnes Dachmodul so angeordnet ist, dass es einen Bereich zwischen seitlichen Rahmenteilen, die sich in eine Fahrzeuglängsrichtung erstrecken, abdeckt. Seitliche Rahmenabdeckteile sind dabei nicht vorgesehen.

Der Erfindung liegt die Aufgabe zugrunde, ein Fahrzeugdach für ein Kraftfahrzeug dahingehend weiterzuentwickeln, dass an einem einzigen Grundrahmen, der aus seitlichen Rahmenteilen besteht, mehrere Dachmodule aus einer Vielzahl von verschiedenen Dachmodulen angebracht werden können, um die Variabilität bzw. die Kombinationsmöglichkeiten an möglichen Fahrzeugdächern zu erhöhen. Dadurch lässt sich auch eine Gewichtsersparnis der Dachmodule und eine erleichterte Serienfertigung erreichen, was wirtschaftlich von Vorteil ist.

Diese Aufgabe wird mit einem Fahrzeugdach gemäß dem Anspruch 1 gelöst.

Weitere vorteilhafte Ausführungsformen der Erfindung sind in den abhängigen Ansprüchen angegeben.

Vorteilhafterweise wird das Fahrzeugdach von gesonderten Bauteilen, die aus Dachmodulen und Rahmenabdeckteilen bestehen, gebildet, so dass eine größere Vielfalt an Dachausführungen ermöglicht wird.

Vorteilhafterweise können die seitlichen Rahmenteile aus je einem vorderen und einem hinteren Rahmenteil zusammengesetzt sein, die gelenkig miteinander verbunden sind, so dass das Fahrzeugdach für ein Cabriolet-Fahrzeug verwendet werden kann.

Vorteilhafterweise können die Dachmodule lösbar an dem Rahmen angebracht werden, so dass sie ausgetauscht werden können.

Vorteilhafterweise ist wenigstens das hintere Dachmodul als Glaselement ausgebildet, so dass die Sicht aus dem Kraftfahrzeug vergrößert wird.

Weitere Merkmale und Zweckmäßigkeiten der Erfindung ergeben sich aus der Beschreibung anhand der Figuren, von denen zeigen:
Fig. 1 eine perspektivische Teilansicht eines Kraftfahrzeugs mit einem erfindungsgemäßen Fahrzeugdach,

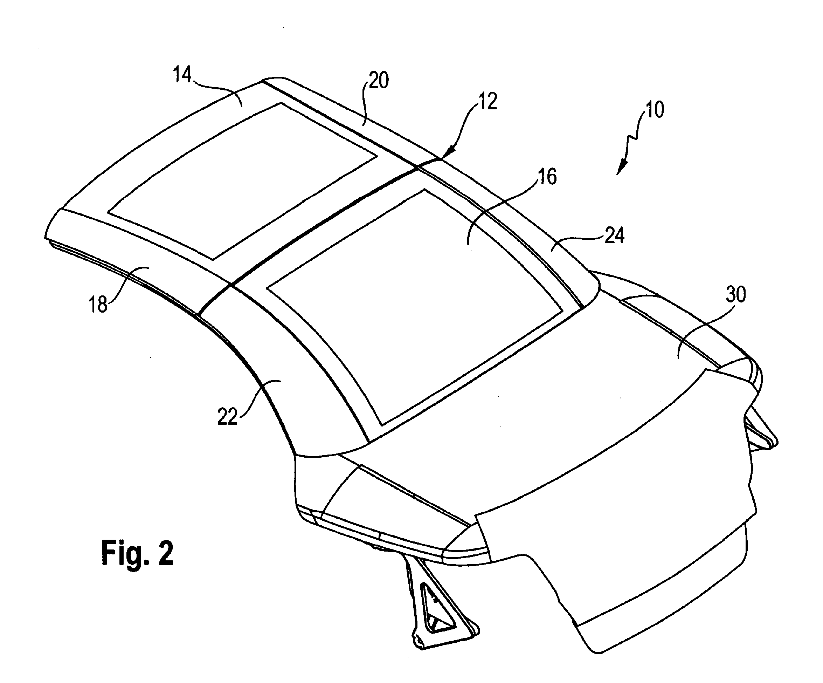

Fig. 2 eine Teilansicht eines Kraftfahrzeugs mit einem erfindungsgemäßen Fahrzeugdach,
Fig. 3 eine Explosionsdarstellung eines Fahrzeugdachs gemäß einer ersten Ausführungsform,
Fig. 4 eine Explosionsdarstellung eines Fahrzeugdachs gemäß einer zweiten Ausführungsform, und
Fig. 5 eine Explosionsdarstellung eines Fahrzeugdachs gemäß einer dritten Ausführungsform.

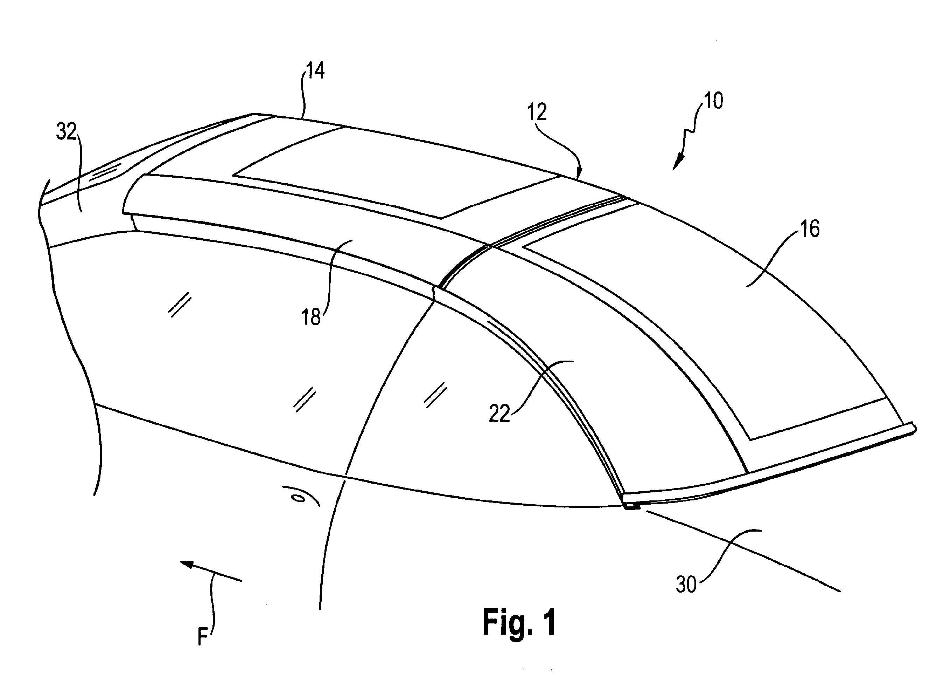

Fig. 1 zeigt eine perspektivische Teilansicht eines Kraftfahrzeugs 10, das ein Cabriolet Fahrzeug ist, mit einem Fahrzeugdach 12 gemäß einer ersten Ausführungsform, gesehen schräg von hinten. Die Fahrzeuglängsrichtung F ist durch den Pfeil F gekennzeichnet. Das Fahrzeugdach 12 weist in Fahrzeuglängsrichtung F gesehen ein vorderes Dachmodul 14, ein hinteres Dachmodul 16 und vier Rahmenabdeckteile 18, 20, 22, 24 auf.

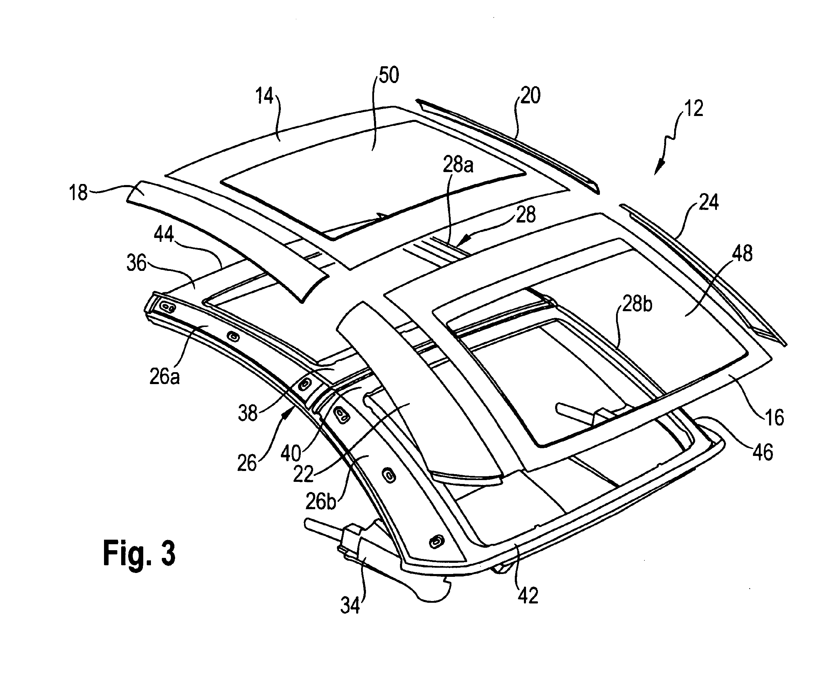

Zwei Rahmenteile 26, 28 sind jeweils spiegelsymmetrisch seitlich an einer Fahrzeugkarosserie derart angebracht, dass sie sich in Fahrzeuglängsrichtung F von einem Heckbereich 30 des Kraftfahrzeugs 10 zu einer Seite eines Windschutzscheibenrahmens 32 erstrecken (Fig. 3). Die beiden seitlichen Rahmenteile 26, 28 sind aus je einem vorderen Rahmenteil 26a, 28a und einem hinteren Rahmenteil 26b, 28b zusammengesetzt.

Die vorderen Rahmenteile 26a, 28a und die hinteren Rahmenteile 26b, 28b sind in bekannter Weise über nicht dargestellte Gelenke gelenkig miteinander verbunden. Die hinteren Rahmenteile 26b, 28b sind in bekannter Weise über Gelenke 34 gelenkig mit der Fahrzeugkarosserie verbunden und in an sich bekannter Weise mittels eines Öffnungs- und Schließmechanismus zum Öffnen und Schließen des Fahrzeugdachs 12 bewegbar. Die beiden vorderen Rahmenteile 26a, 28a und die beiden hinteren Rahmenteile 26b, 28b sind, wie in Fig. 3 zu sehen ist, an ihrem jeweils vorderen und hinteren Ende starr mit Querträgern 36, 38, 40, 42 verbunden oder einteilig mit ihnen ausgebildet. Dadurch ist jeweils ein in sich starrer vorderer Rahmen 44 und ein in sich starrer hinterer Rahmen 46 gebildet.

An dem vorderen Rahmen 44 sind je zwei vordere Rahmenabdeckteile 18, 20 und das vordere Dachmodul 14 befestigt. Dabei überdeckt das vordere Dachmodul 14 den Bereich zwischen den beiden vorderen Rahmenteilen 26a, 28a. Die vorderen Rahmenabdeckteile 18, 20 sind beidseitig des vorderen Dachmoduls 14 angeordnet und überdecken die beiden vorderen Rahmenteile 26a, 28a.

An dem hinteren Rahmen 46 sind je zwei hintere Rahmenabdeckteile 22, 24 und das hintere Dachmodul 16 befestigt. Dabei überdeckt das hintere Dachmodul 16 einen Bereich zwischen den beiden hinteren Rahmenteilen 26b, 28b. Die hinteren Rahmenabdeckteile 22, 24 sind beidseitig des hinteren Dachmoduls 16 angeordnet und überdecken die beiden hinteren Rahmenteilen 26b, 28b.

Die Dachmodule 14, 16 und die Rahmenabdeckteile 18, 20, 22, 24 können dabei in bekannter Weise fest mit den Rahmenteilen 26, 28 und den Querträgern 36, 38, 40, 42, beispielsweise durch Kleben oder Nieten, oder sonstwie lösbar mit dem Rahmen 26 und den Querträgern 36, 38, 40, 42, beispielsweise durch Schnappverschlüsse, verbunden sein.

Das hintere Dachmodul 16 und das vordere Dachmodul 14 sind bei dieser Ausführungsform Glaselemente 48 und 50. Das Glaselement 48 bildet dadurch eine Rückscheibe für das Kraftfahrzeug 10.

Optional kann ein Rollo als Sonnenschutz vorgesehen sein. Alternativ können die Glaselemente in bekannter Weise elektrisch abdunkelbar sein.

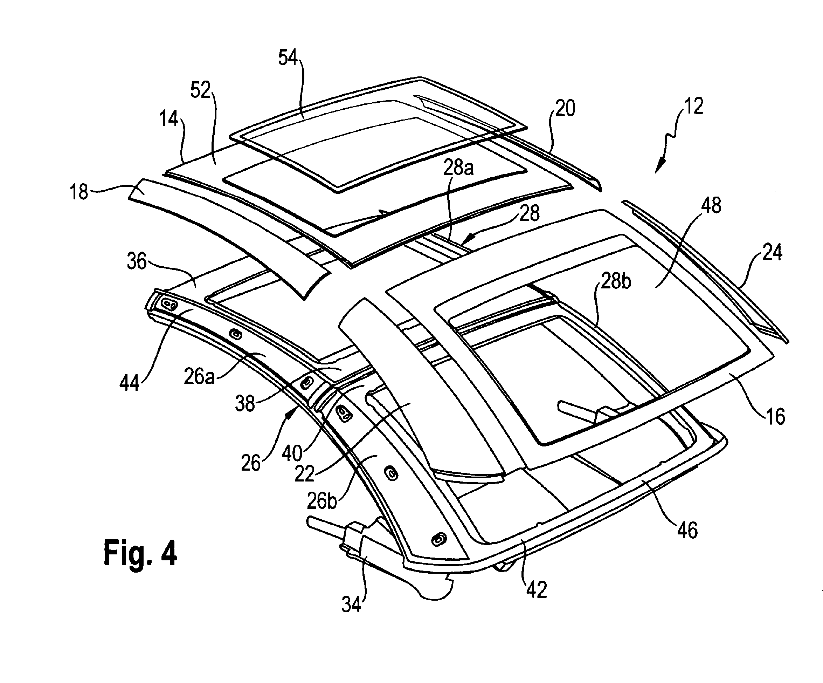

Fig. 4 zeigt eine Kraftfahrzeug 10, das ein Cabriolet-Fahrzeug ist, mit einem Fahrzeugdach 12 gemäß einer zweiten Ausführungsform. Es werden nur die Unterschiede zu der ersten Ausführungsform erläutert.

Das vordere Dachmodul 14 weist ein in einem Rahmen 52 eingelassenes Glas-Hub-Element 54 auf, das sich in bekannter Weise um eine in Fahrzeugquerrichtung verlaufende Achse schwenken lässt und so eine Öffnung in dem Fahrzeugdach 12 zumindest teilweise freigibt bzw. verschließt.

Anstelle des Glas-Hub-Elements kann ein Schiebedach eingebaut sein. Optional kann ein Rollo als Sonnenschutz vorgesehen sein. Alternativ kann das Glaselement in bekannter Weise elektrisch abdunkelbar sein.

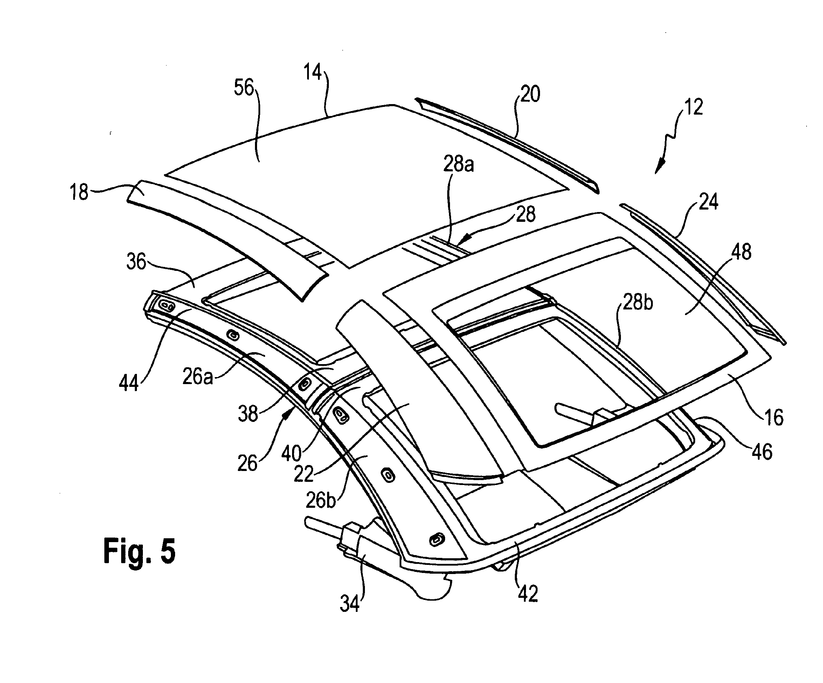

Fig. 5 zeigt eine Kraftfahrzeug 10 mit einem Fahrzeugdach 12 gemäß einer dritten Ausführungsform. Es werden nur die Unterschiede zu der ersten und zweiten Ausführungsform erläutert.

Das vordere Dachmodul 14 ist als eine Platte 56 ausgebildet, die beispielsweise aus halbsteifem Kunststoff oder Blech ist.

In die Platte kann ein Schiebedach eingebaut sein. Optional kann ein Rollo als Sonnenschutz vorgesehen sein. Alternativ kann das Glaselement in bekannter Weise elektrisch abdunkelbar sein.

Für das Fahrzeugdach sind alle Dachmodule denkbar, die geeignet sind, den Bereich zwischen den seitlichen Rahmenteilen zu überdecken bzw. auszufüllen.

Die Dachmodule und die Rahmenabdeckteile können beispielsweise derart an dem Rahmen angebracht werden, dass zunächst die Dachmodule an den Rahmenteilen bzw. Querträgern angebracht werden und anschließend die Rahmenabdeckteile die Dachmodule zumindest teilweise überdeckend angebracht werden. Dadurch sind etwaige Montagespuren, wie beispielsweise Klebemittelreste, nicht sichtbar.

## Patentansprüche

1. Fahrzeugdach (12) für ein Kraftfahrzeug (10), mit zwei seitlichen Rahmenteilen (26, 28), von denen jeder an einer Fahrzeugkarosserie derart anbringbar ist, dass er sich an einer Fahrzeugseite von einem Heckbereich (30) des Kraftfahrzeugs (10) zu einer Seite eines Windschutzscheibenrahmens (32) erstreckt,
einem vorderen Dachmodul (14) und einem hinteren Dachmodul (16), die den Bereich zwischen den Rahmenteilen (26, 28) überdecken und an den Rahmenteilen (26, 28) befestigt sind,
je zwei vorderen Rahmenabdeckteilen (18, 20), die beidseitig des vorderen Dachmoduls (14) die seitlichen Rahmenteile (26, 28) überdecken, und
je zwei hinteren Rahmenabdeckteilen (22, 24), die beidseitig des hinteren Dachmoduls (16) die seitlichen Rahmenteile (26, 28) überdecken.

2. Fahrzeugdach (12) nach Anspruch 1, **dadurch gekennzeichnet,**
**dass** die beiden seitlichen Rahmenteile (26, 28) aus je einem vorderen (26a, 28a) und einem hinteren Rahmenteil (26b, 28b) zusammengesetzt sind, die gelenkig miteinander verbunden sind, wobei das vordere Dachmodul (14) an den vorderen Rahmenteilen (26a , 28a) befestigt ist und das hintere Dachmodul (16) an den hinteren Rahmenteilen (26b, 28b) befestigt ist.

3. Fahrzeugdach (12) nach Anspruch 2, **dadurch gekennzeichnet,**
**dass** die beiden hinteren Rahmenteile (26b, 28b) für eine gelenkige Verbindung mit der Fahrzeugkarosserie vorgesehen sind.

4. Fahrzeugdach (12) nach Anspruch 2 oder 3, **dadurch gekennzeichnet,**
**dass** die beiden vorderen Rahmenteile (26a, 28a) und die beiden hinteren Rahmenteile (26b, 28b) an ihrem jeweils vorderen und hinteren Ende mit Querträgern (36, 38, 40, 42) verbunden sind, so dass jeweils ein in sich starrer vorderer Rahmen (44) und ein in sich starrer hinterer Rahmen (46) gebildet ist.

5. Fahrzeugdach (12) nach einem der vorhergehenden Ansprüche, **dadurch gekennzeichnet,**
**dass** das hintere Dachmodul (16), das vordere Dachmodul (14) und die seitlichen Rahmenabdeckteile (18, 20, 22, 24) lösbar an den Rahmenteilen (26, 28) angebracht sind.

6. Fahrzeugdach (12) nach einem der Ansprüche 1 bis 4,
**dadurch gekennzeichnet,**
**dass** das hintere Dachmodul (16), das vordere Dachmodul (14) und die seitlichen Rahmenabdeckteile (18, 20, 22, 24) durch Kleben an den Rahmenteilen (26, 28) angebracht sind.

7. Fahrzeugdach (12) nach einem der vorhergehenden Ansprüche, **dadurch gekennzeichnet,**
**dass** wenigstens das hintere Dachmodul (16) ein Glaselement (38, 40) ist.

8. Fahrzeugdach (12) nach Anspruch 7, **dadurch gekennzeichnet,**
**dass** das Glaselement (38, 40) elektrisch abdunkelbar ist.

9. Fahrzeugdach (12) nach Anspruch 7, **dadurch gekennzeichnet, dass** ein Rollo als Sonnenschutz für das vordere Dachmodul (14) vorgesehen ist.

10. Fahrzeugdach (12) nach einem der vorhergehenden Ansprüche, **dadurch gekennzeichnet,**
**dass** das vordere Dachmodul (14) ein in einem Rahmen (52) eingelassenes Glas-Hub-Element (54) ist.

11. Fahrzeugdach (12) nach einem der Ansprüche 1 bis 9,
**dadurch gekennzeichnet,**
**dass** das vordere Dachmodul (14) eine Platte (56) ist.

12. Kraftfahrzeug (10) mit einem Fahrzeugdach (12) nach einem der vorhergehenden Ansprüche.
